# EUROPÄISCHE PATENTSCHRIFT

(11) **EP 1 827 742 B1**
(45) Veröffentlichungstag und Bekanntmachung des Hinweises auf die Patenterteilung: **21.01.2009**
(21) Anmeldenummer: 05808197.7
(22) Anmeldetag: 24.11.2005
(51) Int. Cl.: B23B 51/10

(54) **BOHRER FÜR EIN BOHR-/FASWERKZEUG UND BOHR-/FASWERKZEUG**
DRILL BIT FOR DRILLING/CHAMFERING TOOL, AND DRILLING/CHAMFERING TOOL
FORET POUR OUTIL DE PERÇAGE/CHANFREINAGE ET OUTIL DE PERÇAGE/ CHANFREINAGE CORRESPONDANT

(30) Priorität: 02.12.2004 DE 102004058163
(43) Veröffentlichungstag der Anmeldung: 05.09.2007
(73) Patentinhaber: Kennametal, Inc., Latrobe, PA 15650-0231 (US)
(72) Erfinder: REINHARDT, Werner, 91364 Unterleinleiter (DE); SCHWÄGERL, Jürgen, 92648 Vohenstrauss (DE); HOLZNER, Petra, 90408 Nürnberg (DE)
(74) Vertreter: Tergau & Pohl Patentanwälte
(86) Internationale Anmeldenummer: PCT/EP2005/012560
(87) Internationale Veröffentlichungsnummer: WO 2006/058651

(56) Entgegenhaltungen:
- EP-A- 0 519 233
- EP-A- 0 684 099
- EP-A- 0 893 185
- US-A- 4 353 670
- US-B1- 6 238 151

## Beschreibung

Die Erfindung betrifft einen Bohrer für ein Bohr-/Faswerkzeug sowie ein Bohr-/Faswerkzeug, d.h. ein Kombinationswerkzeug zur spanenden Materialbearbeitung, welches sowohl zum Bohren als auch zum Fasen geeignet ist. Ein Bohr-/Faswerkzeug ist beispielsweise aus der DE 92 06 148 U1 bekannt.

Ein Bohr-/Fäswerkzeug setzt sich üblicherweise zusammen aus einem Grundkörper, der einen Schneideinsatz, insbesondere eine Wendeschneidplatte, als Faswerkzeug trägt und einen im Grundkörper eingespannten Bohrer. Der Schneideinsatz ist dabei derart am Grundkörper zu befestigen, dass die zur Erzeugung einer Fase vorgesehene Schneidkante teilweise in eine Spankammer des Spiratbohrers eingreift. Die Montage des Bohrers im Grundkörper ist somit nicht in beliebigen Positionen möglich. Insbesondere ist bei einer Verstellung der Bohrtiefe, soweit möglich, darauf zu achten, dass die korrekte Winkelrelation zwischen dem Bohrer und dem Schneideinsatz zum Fasen wieder hergestellt wird.

Abweichend von der Fixierung des Fas-Schneideinsatzes mit teilweisem Eingriff in eine Spannut des Bohrers ist es auch möglich, wie beispielsweise aus der WO 94/25210 bekannt, den Fas-Schneideinsatz derart am Grundkörper zu befestigen, dass er gegen eine Nutanlageflanke des Bohrers gepresst wird. Bei dem aus der WO 94/25210 bekannten Werkzeug ist der Fas-Schneideinsatz dabei rechtwinklig zur Bohrerachse verstellbar, um eine Eignung des Werkzeugs für verschiedenen Bohrerdurchmesser zu erreichen. Wird der Bohrer in Längsrichtung verstellt, so ist bei diesem Werkzeug ebenfalls der Winkel zwischen dem Bohrer und dem Grundkörper neu einzustellen.

Aus der EP 0 519 233 A1 ist ein Bohrwerkzeug zu entnehmen, an dessen Außenumfang Schwalbenschwanzführungen ausgebildet sind, an denen ein Zusatzschneidglied befestigt und in Längsrichtung verschoben werden kann. Weiterhin ist aus der EP 068 499 A1 ein Bohr-Faswerkzeug zu entnehmen, bei dem ein Bohrer mit gewendelten Spannuten in eine Aufnahme des Bohr-Faswerkzeugs längsverschieblich einsetzbar ist. Zur Längsverschiebung ist hierbei eine Drehbewegung des Bohrers erforderlich, da dieser im Schaftbereich eine gewendelte Span- oder Führungsfläche aufweist. Die Steigung der Spanfläche entspricht hierbei der Steigung der Spannuten, so dass gewährleistet ist, dass bei einer Längsverstellung ein Faseinsatz immer am Außenumfang des Bohrers in einem Bereich zwischen den Spannuten anliegt.

Ein weiteres Problem bei Bohr-/Faswerkzeugen stellt die Zuführung von Kühlschmiermittel zum Bohrer dar: Kühlschmiermittel, welches durch eine zentrale Bohrung dem Grundkörper zugeführt wird, strömt von diesem aus in die Spannuten des Bohrers. Eine gezielte Zuführung von Kühlschmiermittel zu den Schneidkanten des Bohrers, wie sie insbesondere bei der Minimalmengenschmierung benötigt wird, ist auf diese Weise höchstens eingeschränkt möglich. Bisher wird bei Bohr-/Faswerkzeugen nach dem Stand der Technik auf Kühlkanäle innerhalb des Bohrwerkzeugs, die eine gezieltere Zuführung geringer Kühlschmiermittelmengen zur Bohrerspitze ermöglichen würden, verzichtet, da solche Kanäle den Querschnitt und damit die Belastbarkeit des Bohrers mindern würden. Die eingeschränkten Kühl- und Schmiermöglichkeiten führen wiederum dazu, dass nach dem Stand der Technik Bohr-/Faswerkzeuge hauptsächlich für kleinere, höchstens für mittlere Bohrtiefen bis etwa zum Dreifachen des Bohrerdurchmessers eingesetzt werden.

Der Erfindung liegt die Aufgabe zugrunde, eine besonders flexible, einfach handhabbare Vorrichtung zum Bohren und Fasen zu ermöglichen, welche insbesondere auch für Bohrtiefen von mehr als dem Dreifachen des Bohrerdurchmessers bei gleichzeitig guter Kühl- und Schmiermöglichkeit geeignet ist. Der Bohrer soll hierbei besonders einfach in unterschiedlichen Kombinationswerkzeugen, insbesondere Bohr-/Faswerkzeugen, verwendbar sein.

Diese Aufgabe wird erfindungsgemäß gelöst durch einen Bohrer mit den Merkmalen des Anspruchs 1. Dieser Bohrer ist insbesondere für den Einsatz in einem Bohr-/Faswerkzeug, ebenso jedoch auch für den Einsatz in anderen Kombinationswerkzeugen, beispielsweise Werkzeuge mit einem Senkeinsatz oder einem Reibeinsatz, vorgesehen. Das Werkzeug setzt sich hierbei zusammen aus einem Grundkörper und dem in diesem längsvariabel, d.h. mit einstellbarer Bohrtiefe, eingespannten Bohrer. Am Grundkörper, in dessen Bohreraufnahme der Bohrer einsetzbar ist, ist ein Schneideinsatz, beispielsweise in Form einer Wendeschneidplatte, als Faswerkzeug befestigt. Der Bohrer weist gewendelte Spannuten sowie pro Spannut mindestens einen Kanal für ein Kühl-/Schmiermittel auf. Hierbei können die Kühl-/Schmiermittelkanäle entweder durch den gesamten Bohrer verlaufen oder innerhalb des Bohrers zusammengeführt sein. Am Bohrerumfang ist pro Spannut eine ebene, parallel zur Bohrerachse verlaufende Anlagefläche ausgebildet, die eine einfache Längsverstellung des Bohrers im Grundkörper ermöglicht. Von besonderem Vorteil ist, dass bei der Längsverstellung des Bohrers dessen Winkelposition und damit auch die Winkelrelation zwischen dem Bohrer und dem Schneideinsatz am Grundkörper nicht geändert zu werden braucht, die Längsverstellung daher allein durch eine axiale Verschiebung des Bohrers in Längsrichtung ohne Drehbewegung erfolgt. Gleichzeitig ist ein ausreichender Verstellweg des Bohrers gegeben, da dessen Spannuten nur mit einem geringen Winkel von maximal 25°, insbesondere einem Winkel von höchstens 20°, gewendelt sind. Der geringe Winkel der Wendelung der Spannuten, gemessen relativ zur Längsachse der Bohrers, hat darüber hinaus den Vorteil, dass die Torsionsstabilität im Vergleich zu einem Bohrer mit stärkerer Wendelung erhöht ist. Der Bohrer ist damit auch für größere Bohrtiefen von mehr als 3 x D, beispielsweise 8 x D (D = Bohrerdurchmesser) oder 15 x D, geeignet. Unabhängig von der Bohrtiefe ist in jedem Fall durch die im Bohrer verlaufenden Kühl-/Schmiermittelkanäle eine gezielte Kühl-/Schmiermittelzuführung zur Bohrerspitze, auch bei Minimalmengenschmierung, gegeben. Von besonderem Vorteil ist, dass die Merkmale des Bohrers und des Bohr-/Faswerkzeugs in einem modularen Werkzeug realisierbar sind.

Der Bohrer ist für weite Durchmesserbereiche, insbesondere von 1,5 mm bis 30 mm, geeignet, wobei der Drallwinkel und damit die Steigung der Spannuten vorzugsweise in Abhängigkeit vom Bohrerdurchmesser gewählt wird. Der Drallwinkel, den die Spannuten mit der Bohrerlängsachse einnehmen, ist dabei um so größer, je größer der Bohrerdurchmesser ist. Nach einer bevorzugten Ausgestaltung weicht der in Grad angegebene Drallwinkel der Spannuten vom Wert 7 x D^{0,35} , wobei der Durchmesser D des Bohrers in mm angegeben ist, um nicht mehr als 20%, insbesondere um nicht mehr als 10%, ab.

Unter der Steigung einer Spannut wird derjenige Abschnitt auf der Bohrerlängsachse verstanden, innerhalb dessen die Spannut eine volle Umdrehung beschreibt. Die Steigung der Spannut entspricht somit dem herkömmlichen Begriff der Gewindesteigung bei einem Gewinde. Bevorzugt weicht die Steigung der Spannut in mm vom Wert 24 x D^{2/3}, wobei der Bohrerdurchmesser D ebenfalls in mm angegeben ist, um nicht mehr als 20%, insbesondere um nicht mehr als 10%, besonders bevorzugt um nicht mehr als 5%, ab.

Eine weitere Abhängigkeit besteht bei erfindungsgemäßen Bohrern unterschiedlichen Durchmessers in bevorzugter Ausgestaltung zwischen der Anlagefläche des Bohrers, das heißt derjenigen Fläche des Bohrers, an der der Schneideinsatz des Grundkörpers anliegt, und dem Bohrerdurchmesser. Die in mm angegebene Länge der Anlagefläche in Axialrichtung, d.h. in Längsrichtung des Bohrers, weicht vom Wert 0,2 x D² - 0,8 x D + 30 um höchstens 25%, insbesondere um höchstens 10%, beispielsweise um weniger als 5%, ab, wobei in die genannte Formel alle Angaben in mm einzusetzen sind.

Eine besonders hohe Variabilität des Bohr-/Faswerkzeugs ist dadurch gegeben, dass die Länge der Anlagefläche in Axialrichtung des Bohrers mindestens das Doppelte der Anlagelänge des Schneideinsatzes beträgt. Unter der Anlagelänge des Schneideinsatzes wird hierbei diejenige Länge verstanden, auf der der zum Anbringen einer Fase am Bohrloch vorgesehene Schneideinsatz an der Anlagefläche des Bohrers anliegt.

Der Bohrer des Bohr-/Faswerkzeugs weist vorzugsweise zwei Spannuten auf. Eine besonders hohe Stabilität ist nach einer bevorzugten Ausgestaltung dadurch gegeben, dass sich, im Bohrerquerschnitt betrachtet, der Rücken des Bohrers zwischen den Spannuten über einen Winkel von mindestens 95°, insbesondere einen Winkel von mindestens 100°, beispielsweise mehr als 110°, erstreckt. Generell besteht eine Abhängigkeit zwischen dem zu zerspanenden Werkstoff und der optimalen Ausbildung der Spannuten. Abweichend von den genannten hohen Werten des Winkels des Bohrerrückens kann bei dem Bohr-/Faswerkzeug, falls es beispielsweise für die Leichtmetallzerspanung vorgesehen ist, der Winkel, über den sich der Bohrerrücken erstreckt, weniger als 60°, insbesondere weniger als 45°, betragen.

Die Geometrie des Bohrers ist hinsichtlich der Spanabfuhr vorzugsweise dadurch optimiert, dass der Kerndurchmesser des Bohrers mit zunehmendem Abstand von der Bohrerspitze abnimmt. Der Raum, der zur Spanabfuhr in den Spannuten zur Verfügung steht, nimmt damit nach hinten zu, ohne den Bohrerquerschnitt wesentlich zu schwächen. Der Kerndurchmesser des Bohrers liegt im Bereich von 0,18 x D bis 0,35 x D (D = Bohrerdurchmesser).

Ein Bohrer mit einem von der Bohrerspitze aus nach hinten abnehmenden Kerndurchmesser ist an sich, jedoch nicht im Zusammenhang mit einem Bohr-/ Faswerzeug, beispielsweise aus der EP 0 712 343 B1 bekannt. Die Spannut hat hierbei eine Querschnittsform mit einem mit zunehmender Entfernung von der Bohrerspitze zunehmenden Spanformradius.

Als Werkstoffe des Grundkörpers, des an diesem befestigbaren Fas-Schneideinsatzes sowie des Bohrers kommen sämtliche für die Zerspanungstechnik geeigneten Werkstoffe in Betracht. Beispielsweise kann der Bohrer als Vollhartmetallbohrer oder als Stahlbohrer mit aufgelöteten und/oder lösbar befestigten, zum Beispiel aufgeschraubten Schneideinsätzen ausgebildet sein. Geeignete Werkstoffe der Schneideinsätze sind, abhängig vom Anwendungsgebiet, beispielsweise Hartmetall, Cermet, PKD (polykristalliner Diamant), CBN (kubisches Bornitrid) oder Keramik. Der Bohrer kann auch mehrteilig mit einer aufsetzbaren Bohrerspitze ausgebildet sein. In allen Fällen können die Schneidkanten des Bohrers aus beschichtetem oder unbeschichtetem Werkstoff gebildet sein. Entsprechendes gilt für den als Faswerkzeug vorgesehenen Schneideinsatz des Grundkörpers.

Die der Erfindung zugrundeliegende Aufgabe wird weiter durch ein Bohr-/Faswerkzeug mit den Merkmalen des Anspruchs 12 gelöst. Die bevorzugten Ausgestaltungen nach den Ansprüchen 2 bis 11 gelten sinngemäß auch für das Bohr-/Faswerkzeug nach Anspruch 12.

Nachfolgend wird ein Ausführungsbeispiel der Erfindung anhand einer Zeichnung näher erläutert. Hierin zeigen:
- Fig. 1 a-c: ein Bohr-/Faswerkzeug mit 9 mm Bohrerdurchmesser in verschiedenen Ansichten,
- Fig. 2a+b: den Bohrer des Bohr-/Faswerkzeugs nach Fig. 1 im Vergleich zu einem Bohrer mit 30°-Wendelung,
- Fig. 3a+b: im Querschnitt den Bohrer nach Fig. 2a sowie den Bohrer nach Fig. 2b,
- Fig. 4: einen Bohrer mit 13,5 mm Durchmesser für ein Bohr-/Faswerkzeug,
- Fig. 5a+b: in verschiedenen Ausschnitten einen Bohrer mit 3,4 mm Durchmesser für ein Bohr-/Faswerkzeug,
- Fig. 6a+b: in Seitenansicht sowie im Querschnitt einen Bohrer mit 13,5 mm Durchmesser und verringerter Rückenbreite für ein Bohr-/Faswerkzeug, und
- Fig. 7a+b: in Seitenansicht sowie im Querschnitt einen Bohrer mit 13,5 mm Durchmesser und erhöhter Rückenbreite für ein Bohr-/Faswerkzeug.

Einander entsprechende oder gleich wirkende Teile sind in allen Figuren mit den gleichen Bezugszeichen versehen.

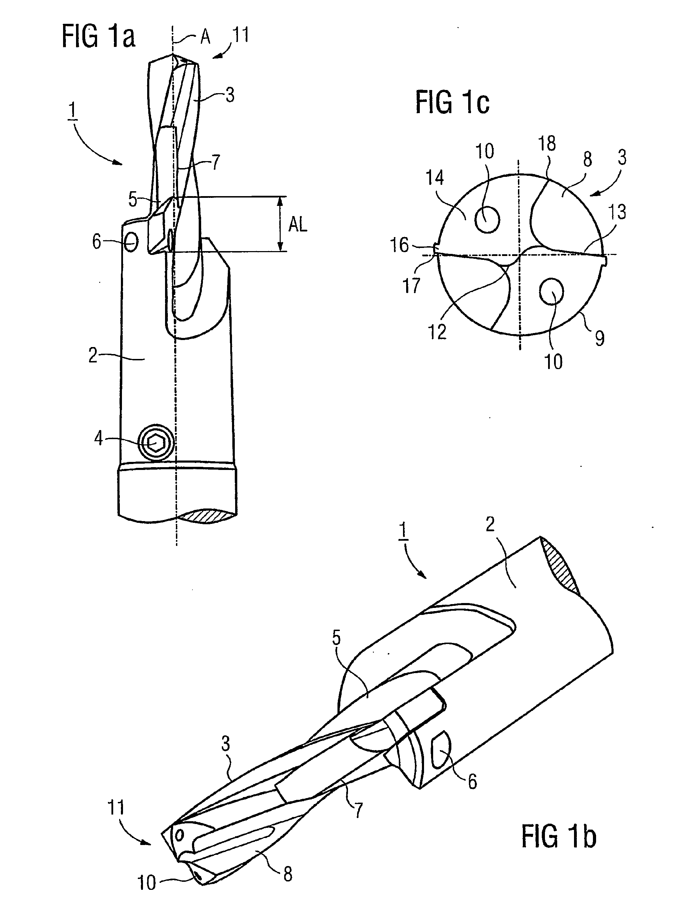

Die Fig. 1 a bis 1 c zeigen ein Bohr-/Faswerkzeug 1, welches aus einem Grundkörper 2 und einem darin eingespannten Bohrer 3 zusammengesetzt ist. Der Grundkörper 2 wird mit einem nicht dargestellten Einspannende in ein Futter einer Werkzeugmaschine eingespannt. Der Bohrer 3 ist somit nur indirekt, mittels des Grundkörpers 2, in der Werkzeugmaschine gehalten. Das Bohr-/Faswerkzeug 3 wird in der Regel als rotierendes Werkzeug eingesetzt, ebenso ist jedoch auch ein Einsatz als feststehendes Werkzeug bei rotierendem Werkstück möglich.

Der Bohrer 3 ist im Grundkörper 2 mittels einer Klemmschraube 4 längsvariabel, d.h. mit einstellbarer Bohrtiefe, gehalten. Eine zusätzliche Fixierung des Bohrers 3 ergibt sich durch einen Schneideinsatz 5, der als Faswerkzeug mittels einer Fixierschraube 6 am Grundkörper 2 befestigt ist und an einer Anlagefläche 7 des Bohrers 3 anliegt. Die Längsverstellmöglichkeit des Bohrers 3 ergibt sich somit zum einen daraus, dass dieser innerhalb des Grundkörpers 2 verschiebbar ist, und zum anderen daraus, dass der Schneideinsatz 5 in unterschiedlichen Positionen auf der Anlagefläche 7 fixiert werden kann. Im dargestellten Ausführungsbeispiel ist lediglich ein Schneideinsatz 5 als Faswerkzeug am Grundkörper 2 befestigt, abweichend hiervon könnte das Bohr-/Faswerkzeug 1 auch mehrere Faswerkzeuge aufweisen. Anders als im Ausführungsbeispiel könnte der mindestens eine Schneideinsatz 5 auch als Wendeschneidplatte ausgebildet sein. Die Länge der Anlagefläche 7 in Axialrichtung des Bohrers 3 ist mit L, die Anlagelänge, die angibt, über welchen Abschnitt der Anlagefläche 7 der Schneideinsatz 5 den Bohrer 3 kontaktiert, mit AL bezeichnet. Die Anlagelänge AL beträgt etwa 40% der Länge L der Anlagefläche 7.

Der Bohrer 3 weist zwei gewendelte Spannuten 8 sowie zwei zwischen diesen liegende Bohrerrücken 9 auf, wobei die Anlageflächen 7 sich derart im Bereich der Bohrerrücken 9 erstrecken, dass der Schneideinsatz 5 in einen Querschnittsbereich innerhalb des Bohrerdurchmessers eingreift. Bei einer Längsverstellung des Bohrers ist dieser, anders als bei einem Bohr-/Faswerkzeug, bei welchem der Fas-Schneideinsatz in eine Spankammer eingreift, nicht zu drehen, sondern lediglich axial zu verschieben.

Innerhalb des Bohrers 3 verlaufen zwei Kühlmittelkanäle 10, deren Austrittsöffnungen sich stirnseitig im Bereich der Bohrerspitze 11 befinden. An der Bohrerspitze 11 sind eine Querschneide 12 sowie an diese anschließende Hauptschneiden 13 erkennbar. Die Geometrie des Bohrers 3 im Bereich der Bohrerspitze 11 ist prinzipiell beispielsweise aus der EP 0 249 104 A1 oder aus der DE 199 55 172 A1 bekannt. Demnach ist eine an die Hauptschneide 13 anschließende Freifläche 14 als gekrümmte Oberfläche mit einem Krümmungsradius von der Hauptschneide 13 zur Spannut 8 verlaufend ausgebildet.

Am Bohrerrücken 9 befindet sich, an eine die Spannut 8 begrenzende Nebenschneide 17 grenzend, eine Führungsfase 16. Abweichend vom dargestellten Ausführungsbeispiel kann der Bohrer 3 auch auf jeder Seite des Bohrerrückens 9 eine Führungsfase 16, d.h. insgesamt vier Führungsfasen bei einem Werkzeug mit zwei Spannuten 8, aufweisen. Der Bohrer 3 kann aus einem beliebigen, für die Herstellung von Bohrwerkzeugen geeigneten Werkstoff, beispielsweise Werkzeugstahl oder Hartmetall, gefertigt sein. Ebenso ist eine Herstellung aus Cermet oder eine Verwendung CBNbeschichteter Bohr-Schneideinsätze (kubisches Bohrnitrid) möglich. Der Kerndurchmesser des Bohrers 3 verjüngt sich von der Bohrerspitze 11 aus nach hinten, so dass sich die Spannuten 8 entsprechend vergrößern und damit eine besonders gute Spanabfuhr gewährleisten. Der Übergang von den Spannuten 8 zum Grundkörper 2 ist derart gestaltet, dass bei maximal in den Grundkörper 2 eingeschobenem Bohrer 3, d.h. bei minimaler Bohrtiefe, die Kontur der Spannuten 8 durch den Grundkörper 2 annähernd fortgesetzt wird. Ein Verfangen von Spänen am Übergang zwischen dem Bohrer 3 und dem Grundkörper 2 wird damit vermieden.

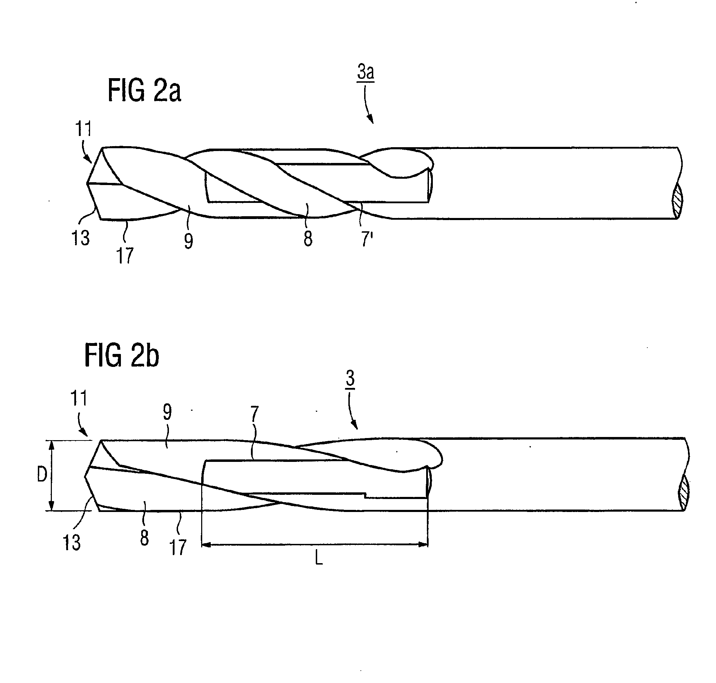

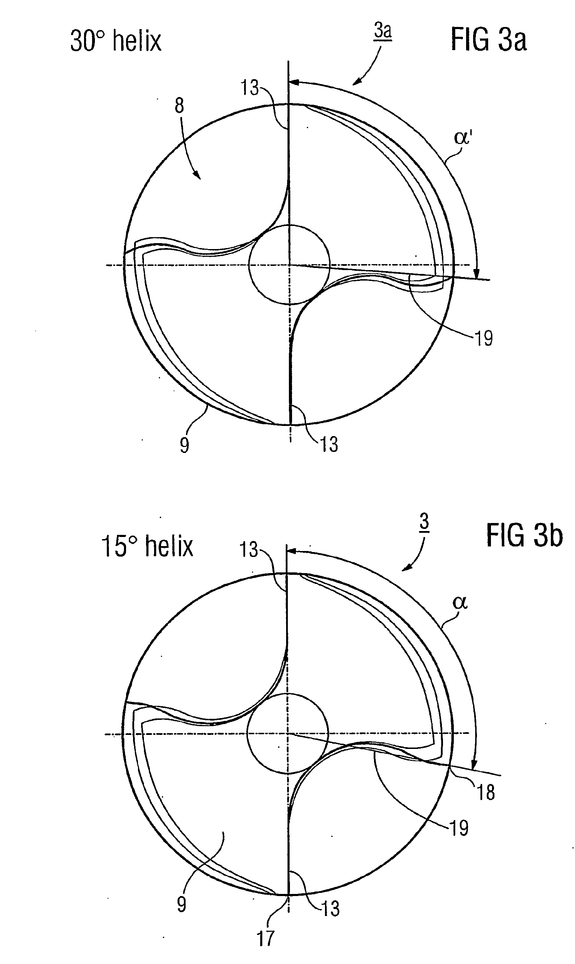

Detaillierte geometrische Merkmale des Bohrers 3 werden im Folgenden anhand der Figuren 2a bis 3b erläutert. Dabei zeigen die Fig. 2b und 3b in einer Seitenansicht bzw. im Querschnitt den Bohrer 3 des Bohr-/Faswerkzeugs 1 nach den Fig. 1a bis 1c, während in den Fig. 2a und 3a zum Vergleich ein fiktives Bohrwerkzeug 3a dargestellt ist, welches hinsichtlich der Wendelung der Spannuten vom Bohrwerkzeug 3 abweicht, ansonsten jedoch ebenfalls, soweit möglich, dessen Merkmale zeigt.

Das in den Fig. 2a und 3a gezeigte Bohrwerkzeug 3a weist eine Wendelung der Spannuten 8 von 30°, bezogen auf die Achse A des Bohr-/Faswerkzeugs 1, auf. Insoweit entspricht das Bohrwerkzeug 3a herkömmlichen Bohrern. Eine in Fig. 2a sichtbare, durch eine Spannut 8 unterbrochene Anlagefläche 7' ist lediglich zum Vergleich mit dem Bohrer 3 gemäß den Fig. 2b, 3b sowie 1a bis 1c dargestellt.

Der ein Teil des Bohr-/Faswerkzeugs 1 bildende Bohrer 3 nach Fig. 2b und 3b weist ebenso wie das Vergleichs-Bohrwerkzeug 3a nach den Fig. 2a und 3a einen Durchmesser D von 9 mm auf. Die Wendelung der Spannuten 8, d.h. die Schrägstellung gegenüber der Werkzeuglängsachse A, beträgt beim Bohrer 3 lediglich 15° und damit die Hälfte dessen, was bei herkömmlichen Bohrern ähnlicher Dimensionierung typisch ist. Die geringe Wendelung der Spannuten 8 des Bohrers 3 erhöht zum einen im Vergleich zum Bohrwerkzeug 3a, bei welchem die Spannuten eine ausgeprägtere Schrägstellung aufweisen, die mechanische Stabilität, insbesondere bei größeren Bohrtiefen, und ermöglicht zum anderen eine sehr langgestreckte Form der Anlagefläche 7 und damit einen weiten Verstellbereich des Bohrers 3 im Grundkörper 2. Im Ausführungsbeispiel mit einem Bohrerdurchmesser D = 9 mm beträgt die Länge L der Anlagefläche 7 ca. 26 mm. Dies entspricht etwa dem Wert von 6 x D^{2/3}, wobei alle Angaben in mm gelten. Bohrer nach Art des in den Fig. 2b und 3b dargestellten Ausführungsbeispiels sind mit unterschiedlichen Durchmessern, insbesondere von 1,5 mm bis 30 mm, herstellbar, wobei Durchmesserbereiche von 4 mm bis 20 mm bevorzugt sind. Die Länge L der Anlagefläche 7 weicht dabei in bevorzugter Ausgestaltung vom Betrag 6 x D^{2/3} um nicht mehr als 25%, beispielsweise um höchstens 15%, ab (alle Längenangaben in mm). Insbesondere sind Ausführungsformen von Bohrern für ein Bohr-/Faswerkzeug 1 herstellbar, bei denen die Länge L den Betrag 6 x D^{2/3}, auch um mehr als 25%, übersteigt. Wie sich aus einem direkten Vergleich zwischen den Fig. 2b und 2a ergibt, ist eine derart lange Anlagefläche 7 bei einem Bohrer mit 30°-Wendelung nicht realisierbar.

Eine gewendelte Spannut eines Bohrers beschreibt allgemein eine Schraubenlinie, die prinzipiell mit dem Gang eines Gewindes vergleichbar ist. Dementsprechend wird im Weiteren der Begriff "Steigung einer Spannut" verwendet, der analog einer Gewindesteigung angibt, innerhalb welcher Länge, in diesem Fall längs der Werkzeugachse, die Spannut eine volle Umdrehung beschreibt. Beim Bohrwerkzeug 3a nach den Fig. 2a und 3a erstrecken sich die Spannuten etwa über eine Länge, die der Steigung der Spannuten 8 entspricht, während der Bohrer 3 nach den Fig. 2b und 3b Spannuten 8 aufweist, die sich deutlich weniger als einmal um die Werkzeugachse winden. Die einen rechnerischen Vergleichswert bildende Steigung der Spannuten 8 übersteigt also in diesem Fall den Längenabschnitt des Bohrers 3, über den sich tatsächlich die Spannuten 8 erstrecken.

Ebenso wie die Länge L der Anlagefläche 7 ist auch die Steigung der Spannuten 8 des Bohrers 3 in bevorzugter Ausgestaltung vom Bohrerdurchmesser D abhängig. Hierbei weicht die Steigung der Spannuten vom Wert 24 x D^{2/3} um nicht mehr als 20%, insbesondere um nicht mehr als 10%, ab, wobei wiederum alle Angaben in mm einzusetzen sind. Auch diese Beziehung zwischen Bohrerdurchmesser D und Ausgestaltung der Spannuten 8 gilt insbesondere für Bohrerdurchmesser D im Bereich von 4 mm bis 20 mm. Im Ausführungsbeispiel mit eine Wendelung der Spannuten 8 von 15° und einem Bohrerdurchmesser D von 9 mm beträgt die Steigung der Spannuten 8 ca. 105 mm. Der Bohrer 3 ist als Teil des Bohr-/Faswerkzeugs 1 für Bohrtiefen bis etwa 3 x D geeignet. Insbesondere bei kleineren Bohrdurchmessern kann die Bohrtiefe des Bohr-/Faswerkzeugs 1 bis zu 15 x D betragen. Die axiale Verstellmöglichkeit des Bohrers 3, bestimmt durch die Länge L der Anlagefläche 7 sowie Geometrie des Schneideinsatzes 5 mit der Anlagelänge AL, beträgt mindestens 75% des Bohrerdurchmessers D.

Die Fig. 3a und 3b verdeutlichen in Querschnittsdarstellungen einen weiteren wesentlichen Unterschied zwischen dem Bohrer 3 des Bohr/Faswerkzeugs 1 und dem Vergleichsbohrwerkzeug 3a mit konstantem Drallwinkel von 30°. Der Bohrerrücken 9 des Bohrers 3 erstreckt sich im Querschnitt über einen Winkel α von ca. 100°, während der Vergleichswinkel α', über den sich der Bohrerrücken 9 des Bohrwerkzeugs 3a erstreckt, weniger als 95° beträgt. Die unterschiedliche Stärke des Bohrerrückens 9 ergibt sich aus der unterschiedlichen Steigung der Spannuten 8 und der Verwendung eines angepassten Schleifwerkzeugs. In dem an die Nebenschneiden 17 grenzenden Bereich sind die Spannuten 8 des Bohrers 3 einerseits und des Vergleichsbohrers 3a andererseits nahezu identisch geformt. Hinsichtlich der Spanformung innerhalb der Spannuten 8 nach den Nebenschneiden 17 existieren somit keine wesentlichen Unterschiede zwischen dem Bohrer 3 und dem Vergleichsbohrer 3a. Im Bereich der den Nebenschneiden 17 in den Spannuten 8 gegenüber liegenden Längskanten 18 des Bohrerrückens 9 unterscheiden sich die Spannuten 8 des Bohrers 3 dagegen deutlich vom Vergleichsbohrer 3a. Beim Bohrer 3 befindet sich besonders viel Material in der Nähe des Bohrerumfangs, d.h. des Bohrerrückens 9. Dies wird beispielsweise dadurch deutlich, dass eine Radiallinie 19, die sich von der Achse A des Bohrers 3 zur Längskante 18 erstreckt, teilweise durch die Spannut 8 verläuft. Im Gegensatz hierzu verläuft die Radiallinie 19 des Vergleichsbohrers 3a durchgehend durch den Bohrerwerkstoff. Aufgrund der vergleichsweise großen Ausdehnung des Bohrerrückens 9 des Bohrers 3 weist dieser auch mit zwei Kühlmittelkanälen 10 (in Fig. 3b nicht dargestellt) eine gute mechanische Stabilität innerhalb des Bohr-/Faswerkzeugs 1 trotz großer Bohrtiefen/- Durchmesserverhältnisse (bevorzugt bis zu 8 x D, insbesondere bis zu 5 x D) auf. Ferner bietet der so verbreiterte Bohrerrücken mehr Raum, um eine möglichst große Anlagefläche 7 für den Fas-Schneideinsatz 5 und somit eine hohe axiale Verstellbarkeit zu gewährleisten. Die Spanformung und der Spantransport wird dadurch wie geschildert nicht beeinträchtigt. Verschiedene alternative Gestaltungen des Bohrerrückens 9 sind durch einzelne Linien innerhalb der Bohrerquerschnitts angedeutet. Der Winkel α weist eine geringe Abhängigkeit von der Form des Bohrerrückens 9 auf.

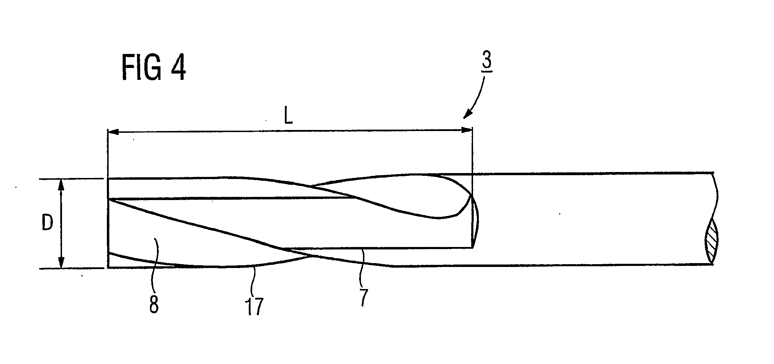

In Fig. 4 ist ausschnittsweise ein Bohrer 3 mit einem Durchmesser D von 13,5 mm dargestellt, der ebenfalls für ein nicht weiter dargestelltes Bohr-/Faswerkzeug 1 geeignet ist. Der Drallwinkel der Spannuten 8 beträgt in diesem Fall 17,3°, die maximale Länge L der Anlagefläche 7 beträgt 56,35 mm (in Ausführungsbeispiel nach Fig. 4 ist die Anlagefläche 7 kürzer, eine Verlängerung auf 56,35 mm wäre jedoch durch einen anderen Schliff möglich).

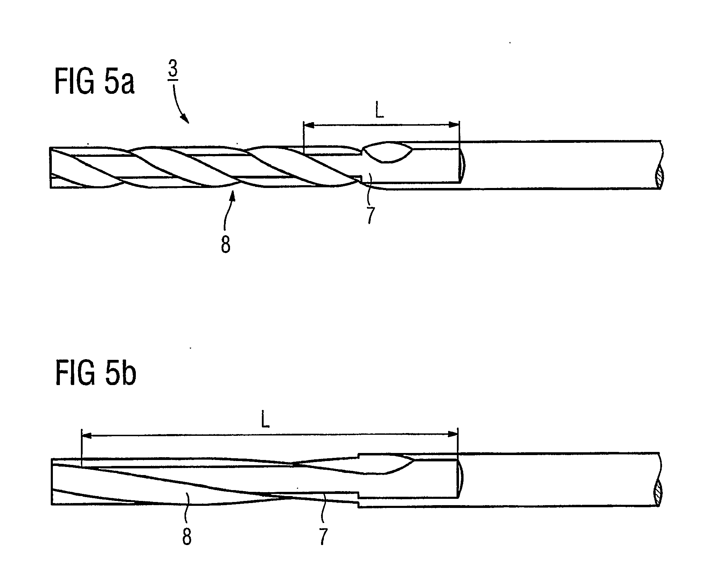

Die Fig. 5a und 5b zeigen in unterschiedlichen Ausschnitten einen Bohrer 3 eines Bohr-/Faswerkzeuges 1 mit einem Bohrerdurchmesser D von 3,4 mm. Der Drallwinkel der Spannuten 8 beträgt lediglich 9,58°, die maximale Länge L der Anlagefläche 7 für den Schneideinsatz 5 beträgt 28,84 mm. Wie ein Vergleich des Ausführungsbeispiels nach den Fig. 5a und 5b mit dem Ausführungsbeispiel nach Fig. 4 sowie mit dem Ausführungsbeispiel nach den Fig. 1a - 1 c und 2b, 3b verdeutlicht, sind die Spannuten 8 des Bohrers 3 um so geringer gewendelt, d.h. um so mehr der Form eines gerade genuteten Bohrers angenähert, je geringer der Bohrerdurchmesser D ist.

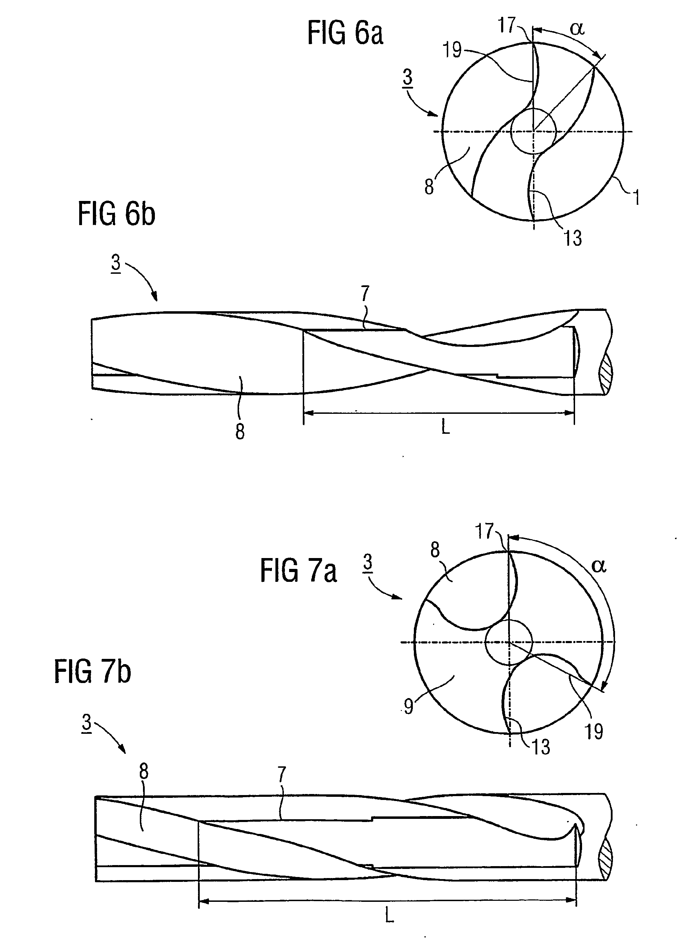

Sonderformen von Bohrern 3 mit einem Bohrerdurchmesser D von jeweils 13,5 mm sowie einem Drallwinkel von 17,3° sind in den Fig. 6a und 6b sowie 7a und 7b dargestellt. Der Bohrer 3 nach Fig. 6a und 6b weist besonders weite Spannuten 8 sowie eine entsprechend geringe Rückenbreite mit einem Winkel α, über den sich der Bohrerrücken 9 erstreckt, von nur 43° auf. Durch die reduzierte Rückenbreite ist die maximale Länge L der Anlagefläche 7 im Vergleich zum Ausführungsbeispiel nach Fig. 4 reduziert, nämlich auf 43,11 mm. Eine ausreichende Längsverstellmöglichkeit des Bohrers 3 innerhalb des Bohr-/Faswerkzeugs 1 ist dennoch gegeben. Der Bohrer 3 nach den Fig. 6a und 6b ist insbesondere für die Zerspanung von Leichtmetallen oder Leichtmetall-Legierungen geeignet.

Im Ausführungsbeispiel nach den Fig. 7a und 7b weist der Bohrer 3 im Vergleich zum Ausführungsbeispiel nach Fig. 4 eine erhöhte Rückenbreite mit einem Winkel α von 117°auf. Die Spannuten 8 sind entsprechend verkleinert, die maximale Länge L der Anlagefläche 7 auf 59,5 mm erhöht. Der Bohrer 3 mit verstärktem Bohrerrücken 9 ist insbesondere für die Zerspanung von Werkstoffen geeignet, die kurze Späne bilden, insbesondere Gusswerkstoffe. In nicht dargestellter Weise verlaufen auch bei den Ausführungsbeispielen nach den Fig. 6a und 6b sowie 7a und 7b Kühlmittelkanäle 10 innerhalb des Bohrers 3. Ebenso sind Führungsfasen 16 zumindest an den Nebenschneiden 17 vorgesehen. In jedem der vorstehend erläuterten Ausführungsbeispiele kann die Bohrerspitze 11 durch ein separates, mit dem übrigen Bohrer 3 zu verbindendes Teil gebildet sein. Ebenso ist es möglich, an der Bohrerspitze 11 einzelne Schneideinsätze lösbar oder dauerhaft zu befestigen.

## Patentansprüche

1. Bohrer (3) zur längsvariablen Aufnahme insbesondere in einem Bohr-/Faswerkzeug mit einer sich in Längsrichtung erstreckenden Achse (A), mit einem Durchmesser (D), mit maximal 25° relativ zur Achse (A) des Bohrers (3) gewendelten Spannuten (8), mit einem Kühlmittelkanal (10) pro Spannut (8), sowie mit einer sich in Längsrichtung erstreckenden Anlagefläche (7), die für die Anlage eines Schneideinsatzes (5) des Bohr-/Faswerkzeugs mit einer Anlagelänge (AL) vorgesehen ist, wobei die Anlagefläche (7) sich in Längsrichtung ohne Überquerung einer der Spannuten (8) ersbrecht. und als ein abgeflachtes ebenes Teilstück eines gerundeten Bohrerrückens (9) ausgebildet ist und wobei die seitliche Begrenzungslinien der Anlagefläche (7) parallel zur Längsrichtung verlaufen.

2. Bohrer (3) nach Anspruch 1,
**dadurch gekennzeichnet,**
**dass** der in Grad angegebene Drallwinkel der Spannuten (8) vom Wert 7 x D^{0,35}, wobei der Durchmesser D in mm angegeben ist, um nicht mehr als 20% abweicht.

3. Bohrer (3) nach Anspruch 1 oder 2,
**dadurch gekennzeichnet,**
**dass** die Länge (L) der Anlagefläche (7) in Axialrichtung vom Wert 0,2 x D² - 0,8 x D + 30 (alle Angaben in mm) um höchstens 25% abweicht.

4. Bohrer (3) nach einem der Ansprüche 1 bis 3,
**dadurch gekennzeichnet,**
**dass** die Länge (L) der Anlagefläche (7) in Axialrichtung mindestens das Doppelte einer Anlagelänge (AL) eines als Faswerkzeug ausgebildeten Schneideinsatzes (5) beträgt, mit der der Schneideinsatz (5) im montierten Zustand an der Anlagefläche (7) anliegt.

5. Bohrer (3) nach einem der Ansprüche 1 bis 4,
**dadurch gekennzeichnet,**
**dass** der Bohrerrücken (9) sich über einen Winkel (α) von mindestens 95° erstreckt..

6. Bohrer (3) nach einem der Ansprüche 1 bis 5,
**dadurch gekennzeichnet,**
**dass** seine Bohrtiefe mindestens 3 x D beträgt.

7. Bohrer (3) nach einem der Ansprüche 1 bis 6,
**gekennzeichnet durch**
einen Kerndurchmesser, der mit zunehmendem Abstand von der Bohrerspitze (11) abnimmt und im Bereich von 0,18 x D bis 0,35 x D liegt.

8. Bohrer (3) nach einem der Ansprüche 1 bis 7,
**dadurch gekennzeichnet,**
**dass** er als Vollhartmetallbohrer ausgebildet ist.

9. Bohrer (3) nach einem der Ansprüche 1 bis 7,
**dadurch gekennzeichnet,**
**dass** er mehrere Schneideinsätze, insbesondere aus Hartmetall, Cermet, PKD, CBN oder Keramik, aufweist.

10. Bohrer (3) nach Anspruch 9,
**dadurch gekennzeichnet,**
**dass** die Schneideinsätze aufgelötet sind.

11. Bohrer (3) nach Anspruch 9 oder 10,
**dadurch gekennzeichnet,**
**dass** die Schneideinsätze lösbar verbunden sind.

12. Bohr-/Faswerkzeug mit einem Bohrer (3) nach einem der vorhergehenden Ansprüche sowie mit einem Grundkörper (2), welcher eine Bohreraufnahme sowie einen Schneideinsatz (5) als Faswerkzeug aufweist, wobei der Bohrer (3) im Grundkörper (2) in Längsrichtung längenvariabel aufgenommen ist und der Schneideinsatz (5) mit einer Anlagelänge (AL) an der Anlagefläche (7) des Bohrers (3) anliegt.

## Claims

1. Drill bit (3) for accommodating in particular in a drilling/chamfering tool in a longitudinally variable manner, having an axis (A) extending in the longitudinal direction, having a diameter (D), having helical flutes (8) with a helix angle of at most 25° relative to the axis (A) of the drill bit (3), having one coolant passage (10) per flute (8), and having a bearing surface (7) which extends in the longitudinal direction and is provided for a cutting insert (5) of the drilling/chamfering tool having a bearing length (AL) to bear against, wherein the bearing surface (7) extends in the longitudinal direction without crossing one of the flutes (8) and is designed as a truncated, flat section of a rounded drill bit land (9), and wherein the lateral boundary lines of the bearing surface (7) run parallel to the longitudinal direction.

2. Drill bit (3) according to Claim 1, **characterized in that** the helix angle, specified in degrees, of the flutes (8) deviates from the value 7 x D^{0.35}, where the diameter D is specified in mm, by not more than 20%.

3. Drill bit (3) according to Claim 1 or 2, **characterized in that** the length (L) of the bearing surface (7) in the axial direction deviates from the value 0.2 x D² - 0.8 x D + 30 (all specifications in mm) by at most 25%.

4. Drill bit (3) according to one of Claims 1 to 3, **characterized in that** the length (L) of the bearing surface (7) in the axial direction is at least twice a bearing length (AL) of a cutting insert (5) designed as a chamfering tool, with which bearing length (AL) the cutting insert (5) bears against the bearing surface (7) in the fitted state.

5. Drill bit (3) according to one of Claims 1 to 4, **characterized in that** the drill bit land (9) extends over an angle (α) of at least 95°.

6. Drill bit (3) according to one of Claims 1 to 5, **characterized in that** its drilling depth is at least 3 x D.

7. Drill bit (3) according to one of Claims 1 to 6, **characterized by** a core diameter which decreases with increasing distance from the drill bit point (11) and is within the range of 0.18 x D to 0.35 x D.

8. Drill bit (3) according to one of Claims 1 to 7, **characterized in that** it is designed as a solid carbide drill bit.

9. Drill bit (3) according to one of Claims 1 to 7, **characterized in that** it has a plurality of cutting inserts, in particular made of carbide, cermet, PCD, CBN or ceramic.

10. Drill bit (3) according to Claim 9, **characterized in that** the cutting inserts are brazed on.

11. Drill bit (3) according to Claim 9 or 10, **characterized in that** the cutting inserts are detachably connected.

12. Drilling/chamfering tool having a drill bit (3) according to one of the preceding claims and having a parent body (2) which has a drill bit receptacle and a cutting insert (5) as chamfering tool, wherein the drill bit (3) is accommodated in the parent body (2) in such a way as to be variable in length in the longitudinal direction, and the cutting insert (5) bears with a bearing length (AL) against the bearing surface (7) of the drill bit (3).

## Revendications

1. Foret (3) destiné à être reçu de manière variable quant à sa longueur, en particulier dans un outil de perçage/chanfreinage, présentant un axe (A) qui s'étend en direction longitudinale, un diamètre (D), des gorges à copeaux (8) formant par rapport à l'axe (A) du forêt (3) une hélice d'un angle le maximum de 25°, un canal à réfrigérant (10) pour chaque gorge à copeaux (8), et une surface d'appui (7) qui s'étend en direction longitudinale et qui est prévue pour la venue en appui d'un insert de coupe (5) de l'outil de perçage/chanfreinage avec une surface d'appui (AL), ladite surface d'appui s'étendant en direction longitudinale sans traverser l'une des gorges à copeaux (8) et étant réalisée sous la forme d'une partie plane aplatie d'un dos de foret (9) arrondi, et les lignes de délimitation latérales de la surface d'appui (7) s'étendent parallèlement à la direction longitudinale.

2. Foret (3) selon la revendication 1,
**caractérisé en ce que** l'angle de l'hélice, exprimé en degrés, des gorges à copeaux (8) ne s'écarte pas de plus de 20 % de la valeur 7 x D^{0,35}, le diamètre D étant exprimé en millimètre.

3. Foret (3) selon la revendication 1 ou 2,
**caractérisé en ce que** la longueur (L) de la surface d'appui (7) en direction axiale s'écarte au maximum de 25 % de la valeur 0,2 x D² - 0,8 x D + 30 (toutes les données en mm).

4. Foret (3) selon l'une des revendications 1 à 3,
**caractérisé en ce que** la longueur (L) de la surface d'appui (7) en direction axiale s'élève au moins au double d'une longueur d'appui (AL) d'un insert de coupe (5) réalisé sous forme d'outil de chanfreinage, longueur sur laquelle l'insert de coupe (5) est en appui contre la surface d'appui (7) à l'état monté.

5. Foret (3) selon l'une des revendications 1 à 4,
**caractérisé en ce que** le dos de forêt (9) s'étend sur un angle (α) d'au moins 95°.

6. Foret (3) selon l'une des revendications 1 à 5,
**caractérisé en ce que** sa profondeur de perçage s'élève au moins à 3xD.

7. Foret (3) selon l'une des revendications 1 à 6,
**caractérisé par** un diamètre à coeur qui diminue lorsque la distance depuis la pointe du foret (11) augmente, et est situé dans la plage de 0,18 x D à 0,35 x D.

8. Foret (3) selon l'une des revendications 1 à 7,
**caractérisé en ce qu'**il est réalisé sous forme de foret plein en métal dur.

9. Foret (3) selon l'une des revendications 1 à 7,
**caractérisé en ce qu'**il comporte plusieurs inserts de coupe, en particulier en métal dur, en cermet, en PKD, en CBN ou en céramique.

10. Foret (3) selon la revendication 9,
**caractérisé en ce que** les inserts de coupe sont montés par brasage.

11. Foret (3) selon la revendication 9 ou 10,
**caractérisé en ce que** les inserts de coupe sont reliés de façon détachable.

12. Outil de perçage/chanfreinage comprenant un foret (3) selon l'une des revendications précédentes, ainsi qu'un corps de base (2) qui comprend un logement de foret ainsi qu'un insert de coupe (5) à titre d'outil de chanfreinage, le foret (3) étant reçu de manière variable quant à sa longueur en direction longitudinale dans le corps de base (2), et l'insert de coupe (5) est appliqué par une longueur d'appui (AL) sur la surface d'appui (7) du foret (3).
